Europäisches Patentamt

(19) European Patent Office

Office européen des brevets

(11) Numéro de publication: **0 007 299**
**B1**

(12) **FASCICULE DE BREVET EUROPEEN**

(45) Date de publication du fascicule de brevet: 25.11.81

(51) Int. Cl.³: **H 01 S 3/03, H 01 S 3/097**

(21) Numéro de dépôt: **79900012.0**

(22) Date de dépôt: **22.12.78**

(86) Numéro de dépôt international:
**PCT/CH78/00055**

(87) Numéro de publicationinternationale:
**WO 79/00432 12.07.79 Gazette 79/14**

(54) **Laser impulsionnel à milieu actif gazeux excité électriquement.**

(30) Priorité: **23.12.77 CH 15975/77**

(43) Date de publication de la demande:
**23.01.80 Bulletin 80/2**

(45) Mention de la délivrance du brevet:
**25.11.81 Bulletin 81/47**

(84) Etats Contractants Désignés:
**CH DE FR GB SE**

(73) Titulaire: **BATTELLE MEMORIAL INSTITUTE**
**7 route de Drize**
**CH-1227 Carouge/Genève (CH)**

(72) Inventeur: **NERACHER, Arnold**
**30, route de Bellegarde**
**CH-1249 Chancy, Genève (CH)**

(74) Mandataire: **Dousse, Blasco et al,**
**7, route de Drize**
**CH-1227 Carouge/Genève (CH)**

(56) Documents cités:
DE - A1 - 2 528 174
FR - A1 - 2 317 788
FR - A1 - 2 356 297

APPLIED PHYSICS LETTERS, volume 28, n° 1,
publié le 1er janvier 1976.

APPLIED PHYSICS LETTERS, volume 29, n° 8,
publié le 15 octobre 1976,
New-York (US),
C. L. SAM: "Small-size discrete-capacitor $N_2$
laser", voir pages 505—506

IEEE JOURNAL OF QUANTUM ELECTRONICS,
Volume QE-9, n° 8, publié août 1973,
New-York (US),
E. E. BERGMANN et al.: "A short High-Power TE
Nitrogen Laser", voir page 853

IEEE JOURNAL OF QUANTUM ELECTRONICS,
volume QE-12, n° 10, publié octobre 1976,
New-York (US),
W. A. FITZSIMMONS et al.: "Experimental and
Theoretical Investigation of the Nitrogen Laser",
voir pages 624—633

New-York (US),
V. HASSON et al.: "Effective glow discharge
excitation of nitrogen lasers at gas pressures
ranging from 0 to 5 bar",
voir pages 17—18

Laser impulsionnel à milieu actif gazeux excité électriquement

Domaine technique

La présente invention a pour objet un laser impulsionnel à milieu actif gazeux excité électriquement.

Technique antérieure

L'obtention de l'effet laser dans de nombreux milieux actifs à gaz moléculaire, à vapeur métallique ou à excimer exige, ainsi qu'il est connu, l'utilisation de méthodes de pompage capables de permettre la libération d'une énergie de pompage très élevée dans un laps de temps très court (quelques nanosecondes). On connaît déjà un certain nombre de méthodes de pompage capable de procurer un tel effet parmi lesquelles les plus utilisées consistent à générer des décharges électriques sous très fort courant (quelques dizaines à quelques centaines de kA) au sein du milieu actif. De telles méthodes d'excitation électrique sont essentiellement mises en oeuvre selon deux modes principaux, à savoir un mode d'excitation longitudinal du gaz (susceptible d'être réalisé au moyen de deux électrodes placées à chacune des extrémités de la cavité laser) et un mode d'excitation transversal du gaz (susceptible d'être réalisé au moyen de deux électrodes disposées parallèlement à l'axe optique de la cavité).

Un certain nombre de dispositifs à excitation electrique longitudinale ou transversale ont déjà été développés jusqu'à ce jour et, notamment, des dispositifs basés sur l'utilisation de systèmes dits "à transfert de charge". Ces systèmes "à transfert de charge", qui ont pour fonction essentielle de véhiculer jusqu'aux électrodes l'impulsion électrique haute tension chargée de déclencher l'émission stimulée au sein de la cavité laser sont généralement constitués par un assemblage approprié de condensateurs conventionnels comprenant un isolant à bas coefficient diélectrique (en général du Mylar). Cependant, avec tous ces dispositifs "à transfert de charge" conventionnels se posent de problèmes d'adaptation entre le circuit de pompage et le gaz et, notamment, des problèmes de réduction de l'impédance du circuit de décharge ainsi que des problèmes d'obtention de temps de montée dans les impulsions haute tension qui soient compatibles avec les courtes durée de vie des transitions laser. Les solutions adoptées à l'heure actuelle pour résoudre ces différents problèmes et, notamment, pour permettre l'obtention d'un stockage suffisant d'énergie électrique conduisent à la réalisation de dispositifs de grandes dimensions, ce qui présente l'inconvénient majeur d'occasionner un encombrement relativement important et de n'offrir qu'une maniabilité des plus réduites.

Exposé de l'invention

La présente invention a précisément pour but de remédier au moins partiellement aux inconvénients susmentionnés en proposant une conception dite "intégrée" qui permet d'obtenir un laser particulièrement compact.

A cet effet, la présente invention a pour objet un laser impulsionnel à milieu actif gazeux excité électriquement comprenant:

— un premier et un second blocs faits en un matériau diélectrique comportant chacun deux faces d'extrémités, lesdits blocs étant agencés l'un par rapport à l'autre de façon à se faire vis-à-vis par l'une de leurs faces d'extrémité en délimitant un espace étroit entre lesdites faces d'extrémités,

— une première armature métallique s'étendant dans ledit espace étroit entre lesdits blocs diélectriques tout en restant en contact avec l'une et l'autre faces d'extrémités desdits blocs se faisant vis-à-vis, ladite première armature métallique comportant au moins une portion faisant saillie,

— une seconde armature métallique disposée contre l'autre face d'extrémité dudit premier bloc diélectrique opposée à ladite première armature, constituant en coopération avec ledit premier bloc diélectrique et ladite première armature au moins un premier condensateur,

— une troisième armature métallique disposée contre l'autre face d'extrémité dudit second bloc diélectrique opposée à ladite première armature, constituant en coopération avec ledit second bloc diélectrique et ladite première armature au moins un second condensateur, ladite troisième armature métallique comportant au moins une portion faisant saillie en direction de ladite portion saillante de ladite première armature métallique, l'espace constituant la cavité dudit laser étant délimitée de deux côtés par lesdites portions saillantes desdites première et troisième armatures et, d'un troisième côté, par le second bloc diélectrique, cette cavité dudit laser étant destinée à contenir ledit milieu actif gazeux, et les extrémités libres desdites portions saillantes constituant les électrodes chargées d'assurer l'excitation électrique dudit milieu actif gazeux,

— des moyens pour maintenir ledit milieu actif gazeux dans ladite cavité,

— une résistance de charge connectée entre lesdites première et troisième armatures métalliques, ladite seconde armature métallique étant, par ailleurs, destinée à être reliée à l'un des pôles d'une source haute tension dont l'autre pôle est destiné à être relié à ladite troisième armature métallique, de façon à assurer la charge électrique dudit premier condensateur,

— et un organe de décharge déclenchable, connecté entre lesdites seconde et troisième armatures, destiné à assurer la mise en court-circuit au moins momentanée de ces armatures, de façon à entraîner un transfert de charge dudit premier audit second condensateur, ledit transfert de charge donnant alors lieu à l'établissement entre lesdites électrodes de ladite cavité laser d'une différence de potentiel suffisamment rapide et élevée pour engendrer une émission stimulée au sein de cette cavité. Une telle construction est, en soi, connue de par la description dans IEEE Journal of Quantum Electronics PE-9, [8] 853 (1973). Le laser de l'invention est caractérisé par le fait que la portion de la première armature faisant saillie est pointée en direction du second bloc diélectrique et que le matériau constitutif desdits blocs a un coefficient diélectrique supérieur à 80.

On voit ainsi, dans le laser qui vient d'être défini, que c'est l'utilisation de blocs faits en un matériau à haut coefficient diélectrique combinée avec l'agencement particulier des différents éléments constitutifs du laser par rapport à ces blocs diélectriques qui permet d'obtenir une forme de laser dite "intégrée". On notera cependant que l'utilisation de matériaux à coefficient diélectrique supérieur à 80 a déjà été signalée dans le cas de lasers impulsionnels à circuit de décharge Blumlein (voir Applied Physics Letters *29* [8], 505 (1976).

Comme matériaux diélectriques ayant un coefficient diélectrique supérieur à 80, on pourra utiliser des matériaux diélectriques ferroélectriques tels que le titanate de baryum pur ou des matériaux à base de titanacite de baryum dopés avec des éléments tels que $Pb(Ti,Zr)O_3$; $BaO-TiO_2-Al_2O_3$; $PbZrO_3$; $PbHfO_3$; $PbTiO_3$; $CaTiO_3$; $La^{3+}$; $Nb^{5+}$; etc. . . . Comme matériaux diélectriques possibles, on pourra également utiliser des matériaux tels que $TiO_2$; KDP; $KD_2PO_4$ (dideutérosphosphate de potassium); $LiNbO_3$; etc. . . . De manière particulièrement avantageuse, les matériaux susmentionnés seront utilisés sous forme de céramiques.

Ces blocs diélectriques pourront, par ailleurs, revêtir des formes très diverses telles que forme cylindrique, forme parrallèlipipédique, forme cubique, forme prismatique (à section droite triangulaire, ou trapézoïdale, ou encore à contour plus compliqué), ou encore forme cylindrique à section droite non circulaire. L'essentiel est que de tels blocs présentent au moins deux faces d'extrémités opposées sur lesquelles puissent être adaptées des armatures métalliques appropriées, en vue de réaliser les structures "à transfert de charge" désirées. L'épaisseur de ces blocs diélectriques (à savoir distance séparant les faces d'extrémités opposées de ces blocs) sera, en outre, choisie en fonction de la rigidité diélectrique du matériau utilisé de façon à pouvoir tenir aux hautes tensions appliquées (ces tensions pouvant être comprises entre 1 et 100 kV). La rigidité diélectrique des matériaux susmentionnés étant en général plus faible que celle des matériaux diélectriques usuels tels que le Mylar, l'épaisseur adoptée pour de tels blocs diélectriques sera généralement supérieure (en général d'un ordre de grandeur plus élevé). Cependant, le coefficient diélectrique de ces matériaux étant considérablement plus élevé, les sections droites de ces blocs diélectriques pourront avoir, à énergie stockée égale, des dimensions notablement inférieures à celles requises par les systèmes "à transfert de charge" conventionnels (on sait en effet, que la capacité d'un condensateur est respectivement proportionnelle au coefficient diélectrique et à la surface et inversement proportionnelle à l'épaisseur). Ces réductions de surface pouvant aller jusqu'à trois ordres de grandeur, on constate, à l'évidence, qu'on peut ainsi obtenir de notables réductions d'encombrement et donc des lasers particulièrement compacts.

L'utilisation de matériaux à hauts coefficients diélectriques se traduit, par ailleurs, par une réduction notable de l'impédance caractéristique des systèmes "à transfert de charge". Une telle réduction de l'impédance caractéristique permet notamment d'obtenir une vitesse de montée en courant plus grande dans la cavité laser, d'où il résulte une densité et une température électroniques ainsi qu'un taux d'inversion de population plus élevés, ce qui se traduit globalement par une augmentation du rendement et de la puissance de crête du laser.

On sait, par ailleurs, que la cavité laser doit avoir une longueur minimum pour qu'il s'y produise une émission stimulée. Des études récentes ont montré que cette valeur seuil est inversement proportionnelle à la densité initiale d'inversion de population. Il s'ensuit donc que la diminution de l'impédance caractéristique de la ligne a pour avantage additionnel d'entraîner une diminution de cette longueur seuil, ce qui va également dans le sens d'une réduction de l'encombrement. Les études susmentionnées ont également permis de montrer qu'il existe une relation non-linéaire entre la puissance de crête de sortie et la longueur de la cavité, cette puissance de crête augmentant tout d'abord de manière exponentielle, puis de manière linéaire, et enfin atteignant une valeur de saturation au fur et à mesure que la longueur de la cavité augmente. On voit ainsi, contrairement à ce qui était généralement admis, qu'il n'est pas nécessaire d'avoir de grandes longueurs de cavité pour obtenir des valeurs de puissance de crête acceptables.

Il est connu, par ailleurs, en ce qui concerne les matériaux céramiques, que la valeur de leur coefficient diélectrique dépend de la température, cette valeur atteignant un maximum dans les gammes de température voisines de leur point de Curie. On utilisera donc, de manière avantageuse, des matériaux ayant un point de Curie proche ou légèrement supérieur à la température ambiante, de façon à éviter de devoir recourir à l'emploi d'enceintes thermostatisées. De manière préférentielle, on utilisera, par ailleurs, des matériaux ayant un point de Curie sensiblement supérieur à la température ambiante dans les cas où l'on envisage de faire travailler ces matériaux à des fréquences de récurrence élevées (ces matériaux atteignant en effet une température de fonctionnement sensiblement supérieure à la température ambiante du fait de l'échauffement résultant des cadences répétitives). La valeur désirée du point de Curie peut être obtenue, de manière connue, par un dopage approprié de ces matériaux. On pourra également, dans certains cas particuliers, envisager d'utiliser des matériaux ayant un point de Curie très inférieur à la température ambiante (par exemple KDP dont le haut coefficient diélectrique à −150°C permet la conception d'une structure ultra-compacte), en prévoyant la présence d'une enceinte thermostatisée dans laquelle on pourra faire règner la température désirée au moyen par exemple de cellules Peltier à faible consommation électrique.

Comme milieux actifs gazeux susceptibles de donner lieu à des émissions stimulées, on pourra utiliser des milieux gazeux très divers tels que des gaz élémentaires (par exemple l'hydrogène, l'azote, le deutérium, le néon, etc. . . .), des gaz moléculaires (par exemple l'oxyde de carbone, le gaz carbonique, etc. . . .), des mélanges de gaz (par exemple mélange hélium-azote, mélange azote-fluor, l'air, etc. . . .), des gaz excimer (par exemple KrK*, XeF*, ArCl*, ArF*, KrCl*, etc. . . .), ou des vapeurs métalliques. De manière avantageuse, les différents gas ou mélanges de gaz susmentionnés sont utilisés sous des pressions comprises entre $10^{-3}$ Torr et 30 bar. Il est préférable, lorsqu'on désire obtenir le plus grand nombre possible de molécules excitables dans un volume de cavité déterminée, de travailler sous des pressions atmosphériques ou pluri-atmosphériques. Il peut cependant s'avérer souhaitable, dans certains cas particuliers, de travailler sous des pressions nettement inférieures à la pression atmosphérique.

On sait que pour obtenir une émission stimulée dans un gaz, il faut avoir un rapport E/p (E désignant le champ électrique transitoire s'établissant dans la cavité et p la pression régnant dans cette cavité) situé dans une gamme de valeur environ comprise entre 50 et 300 Volts/cm torr. Il convient donc, suivant la pression choisie, d'adapter en conséquence l'écartement entre les électrodes et/ou la tension appliquée, de façon à obtenir le rapport E/p approprié.

Brève description des dessins

Le dessin annexé illustre schématiquement et à titre d'exemple, deux formes d'exécution du laser, objet de la présente invention.

La figure 1 est une vue en coupe transversale, illustrant la première forme d'exécution.

La figure 2 est une vue en coupe longitudinale selon l'axe II—II de la figure 1.

La figure 3 est une vue en coupe longitudinale selon l'axe III—III de la figure 1.

La figure 4 est une vue en coupe d'un premier détail, agrandi, de la figure 1.

La figure 5 est une vue en coupe d'un second détail, agrandi, de la figure 1.

La figure 6 est un schéma du circuit électrique équivalent de cette première forme d'exécution.

La figure 7 est une vue en coupe diamétrale, illustrant la second forme d'exécution.

La figure 8 est une vue en coupe selon l'axe VIII—VIII de la figure 7.

La figure 9 est un schéma du circuit électrique équivalent de cette seconde forme d'exécution.

Meilleures manières de réaliser l'invention

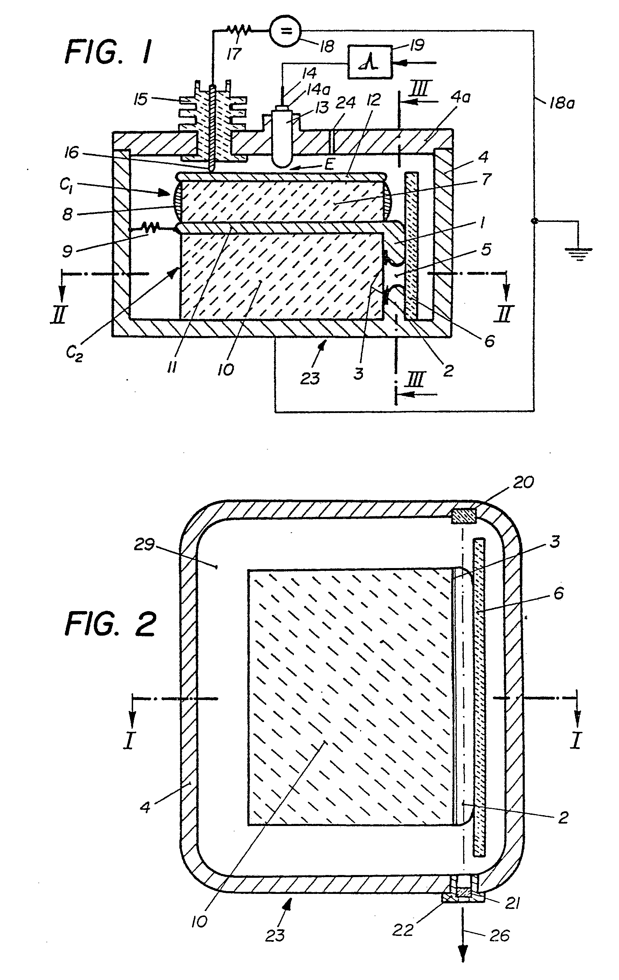

La forme d'exécution représentée aux figures 1 à 6 se rapporte à un agencement du type "transfert de charge simple". Cette forme d'exécution comprend un boîtier métallique étanche 23, se composant d'un récipient parallélépipédique 4 ouvert à sa partie supérieure et d'un couvercle plat rapporté 4a fixé sur cette partie supérieure (couvercle 4a en contact électrique étroit avec le récipient 4). A l'intérieur du boîtier 23 se trouvent disposés, respectivement, un second bloc parallélépipédique 10 reposant par sa face inférieure sur le fond du récipient 4, ledit bloc 10 étant fait en un matériau à haut coefficient diélectrique (par exemple céramique de titanate de baryum); une première plaque métallique rectangulaire 11 recouvrant la face supérieure du bloc 10; un premier bloc parallélépipédique 7 reposant sur la plaque 11, fait en un matériau diélectrique identique à celui du bloc 10, dont l'épaisseur est sensiblement égale à la moitié de celle du bloc 10; et une seconde plaque métallique rectangulaire 12 recouvrant la face supérieure du bloc 7, cette plaque 12 restant à distance du couvercle 4a. L'ensemble constitué par le bloc diélectrique 7 et les plaque métalliques 12 et 11 est ainsi destiné à constituer un premier condensateur $C_1$, cependant que l'ensemble constitué par le bloc diélectrique 10, la plaque métallique 11 et le fond du récipient 4 est destiné à constituer un second condensateur $C_2$ (dont les rôles seront expliqués plus loin). La plaque métallique 11, qui constitue ainsi une électrode commune aux deux condensateurs $C_1$ et $C_2$, est reliée électriquement par l'intermédiaire d'une résistance 9 (de l'ordre de 100 à 1000$\Omega$), au boîtier 23 (cette résistance 9 pouvant éventuellement être remplacée par une bobine).

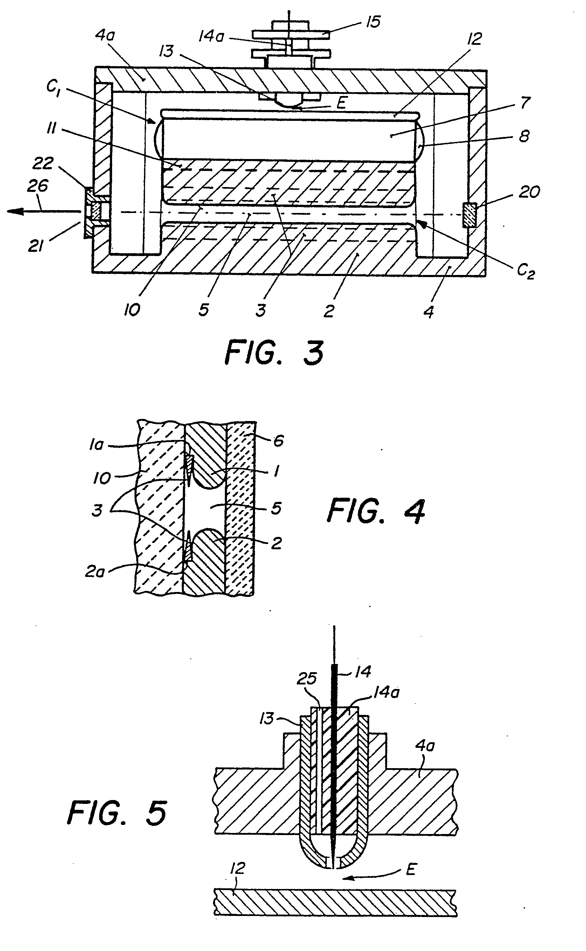

L'un des bords longitudinaux de la plaque métallique 11 comporte un rebord métallique 1 qui vient se plaquer contre la face latérale correspondante du bloc diélectrique 10 en pointant en direction du fond du récipient 4, cependant que le fond de ce récipient 4 comporte, au droit du rebord 1, une nervure métallique longitudinale 2 qui vient également se plaquer contre la même face latérale du bloc 10 en pointant en direction du rebord 1, les extrémités libres du rebord 1 et de la nervure 2 qui se font vis-à-vis présentant und forme arrondie. Contre la face extérieure du rebord 1 et de la nervure 2 se trouve, par ailleurs plaquée une lame isolante rectangulaire 6 (faite par exemple en verre, en matière plastique ou en un matériau céramique) ayant pour fonction d'éviter tout claquage entre le rebord 1 et la portion avoisinante du boîtier 4. L'espace longitudinal ainsi délimité entre le rebord 1 et la nervure 2 est destiné à constituer, en coopération avec la lame isolante 6 et la portion correspondante de la face latérale du bloc 10, la cavité 5 du laser, les extrémités libres du rebord 1 et de la nervure 2 constituant, par ailleurs, les électrodes chargées d'assurer l'établissement d'une décharge électrique transversale au sein de cette cavité 5. Le rebord 1 et la nervure 2 présentent, par ailleurs, chacun, (fig. 4), du coté du bloc 10, des épaulements longitudinaux 1a et 2a dans lesquels sont disposées des électrodes "corona" 3 chargées d'assurer la préionisation de la cavité laser. Ces électrodes "corona" 3 sont constituées de façon connue par des bandes métalliques rectilignes (par exemple en acier trempé) présentant un bord libre en forme de lame extrêmement fine.

Au travers du couvercle 4a et, sensiblement au centre de ce dernier, se trouve monté un bloc métallique cylindrique 13 maintenu en contact électrique étroit avec le couvercle 4a. Ce bloc 13 comporte une extrémité arrondie qui fait saillie à l'intérieur du boîtier en direction de la plaque métallique 12, l'intervalle séparant cette extrémité arrondie de la plaque 12 étant susceptible d'être réglé en faisant coulisser le bloc 13. Le bloc 13, est par ailleurs, (fig. 5) traversé axialement par une tige métallique 14 isolée électriquement du bloc 13 au moyen d'une gaine isolante 14a. L'une des extrémités de cette tige 14 vient affleurer l'extrémité du bloc 13 qui fait saillie à l'intérieur du boîtier 23, cependant que son autre extrémité est reliée électriquement à un générateur d'impulsion haute tension 19. L'extrémité arrondie du bloc métallique 13 et la portion de plaque 12 qui se font vis-à-vis constituent ainsi les deux bornes d'un éclateur E chargé d'assurer l'amorçage de la décharge électrique, la tige 14 constituant par ailleurs de façon connue l'électrode de déclenchement de cet éclateur E.

Au travers d'une autre portion du couvercle 4a se trouve monté un bloc isolant 15 fait en un matériau à haute résistance électrique (Delrin, Teflon, etc....). Ce bloc isolant 15 est traversé de part en part par un doigt métallique 16 dont l'une des extrémités appuie fortement contre la plaque métallique 12. L'autre extrémité de ce doigt métallique 16 est relié électriquement par l'intermédiaire d'une résistance de charge 17 à l'un des pôles d'une source de haute tension continue 18 dont l'autre pôle se trouve relié au boîtier 23 par une connexion 18a (cette connexion 18a étant elle-même reliée à la masse). La fonction de ce doigt métallique 16 relié à la source 18 est donc d'assurer la charge du condensateur $C_1$. Les parois latérales du bloc diélectrique 7 constitutif du condensateur $C_1$ sont recouvertes d'une gaine isolante 8 (par exemple en silicone), destinée à empêcher toute reptation superficielle du courant entre les électrodes 11 et 12.

La cavité laser 5 est par ailleurs équipée d'un résonateur formé de deux miroirs disposés à chacune des extrémités de cette cavité, respectivement un premier miroir totalement réflecteur 20 monté à l'arrière de la cavité (contre la paroi latérale correspondante du boîtier 4) et un second miroir-fenêtre semi-transparent ou transparent 21 (à la longueur d'onde considérée) monté à l'avant de la cavité (dans un flasque-support 22 traversant la paroi latérale correspondante du boîtier 4, ce flasque-support 22 pouvant être fixe ou réglable selon le cas).

Le boîtier 23 est enfin respectivement muni (fig. 5) d'un conduit d'entrée du gaz 25 ménagé dans la gaine isolante 14a du bloc 13 de l'éclateur E, et d'un conduit de sortie de gaz 24 ménagé au travers du couvercle 4a. Le conduit d'entrée 25 est destiné à permettre l'introduction du milieu actif gazeux laserable sous une pression déterminée à l'intérieur du boîtier 23 (et plus spécialement à l'intérieur de la cavité 5); ce conduit 25 débouche de manière avantageuse au niveau de l'extrémité libre de l'électrode de déclenchement 14, de façon à ce que le flux gazeux sortant de ce conduit 25 puisse souffler, en direction de la plaque 12, l'arc électrique engendré par le générateur 19 de manière à provoquer une bonne préionisation. Le débit du gaz évacué par l'orifice de sortie 24 est susceptible d'être réglé. La présence de ce gaz à l'intérieur du boîtier 23 a pour effet, outre le fait de permettre l'émission laser dans la cavité 5, de contribuer à l'isolation électrique de l'ensemble du boîtier 23 et plus particulièrement au niveau de l'éclateur E.

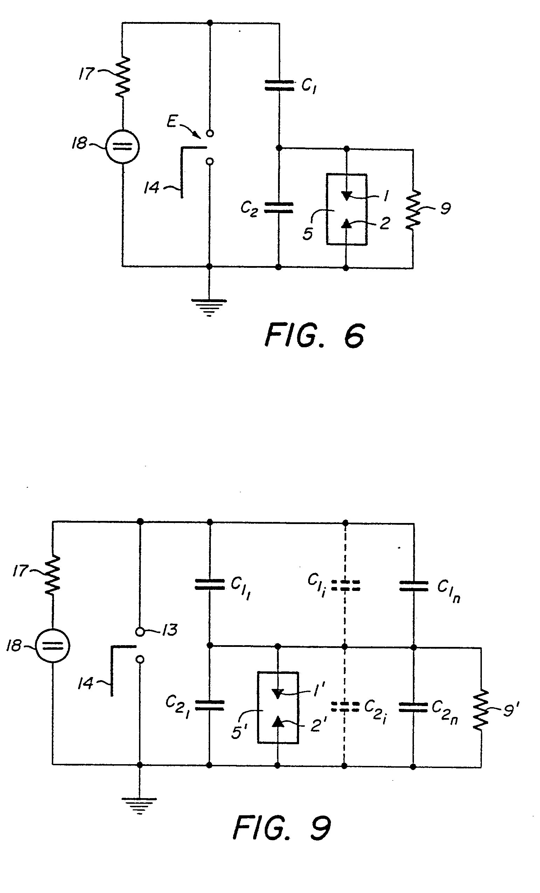

La figure 6 représente le schéma du circuit électrique équivalent du laser qui vient d'être décrit. Ce schéma permet de mieux comprendre le fonctionnement de ce laser, qui est le suivant: la source haute tension 18 étant branchée, le condensateur $C_1$ se charge rapidement par l'intermédiaire du doigt de charge 16 (l'armature supérieure 12 se trouvant au potentiel de la source 18 en fin du cycle de charge, et l'armature inférieure 11 au potentiel de la masse), cependant que le condensateur $C_2$ reste complètement déchargé (armatures toute deux au potentiel de la masse en fin du cycle de charge de $C_1$). Au moment désiré, on active le générateur 19 qui envoie une impulsion haute tension sur l'électrode de déclenchement 14, ce qui a pour effet de provoquer l'amorçage de l'éclateur E et de rendre ainsi ce dernier conducteur. Le condensateur $C_1$ se décharge alors brusquement, par l'intermédiaire de l'éclateur E rendu conducteur et des parois du boîtier 23, dans le condensateur $C_2$ qui se trouve alors brusquement chargé. L'armature supérieure 11 de ce condensateur $C_2$ reste en effet sensible-

ment au potentiel de la masse, du fait de la présence de la résistance 9 qui bloque tout transfert de charge entre le boîtier 23 et l'armature 11, cependant que l'armature inférieure constituée par le fond de l'enceinte est portée à un potentiel transitoire qui dépend de la tension de la source 18 ainsi que des valeurs respectives des capacités des condensateurs $C_1$ et $C_2$. La capacité du condensateur $C_1$ est choisie supérieure à celle du condensateur $C_2$ (égale au double dans la forme d'exécution décrite, étant donné l'épaisseur moitié), de manière à compenser les pertes de conduction de l'éclateur E lors du transfert de charge.

La différence de potentiel qui apparaît ainsi entre les armatures du condensateur $C_2$, et donc entre les électrodes 1 et 2 de la cavité laser 5, a pour effet d'entraîner la production à l'intérieur de la cavité 5 d'une décharge électrique transversale de très forte intensité et de très courte durée (en fait, préionisation de la cavité due aux électrodes corona 3 suivie d'une décharge principale entretenue par la décharge du condensateur $C_2$). Le milieu actif gazeux ainsi excité par la décharge électrique donne alors lieu à la production d'une émission stimulée (qui peut être, ou non, superradiante). On obtient ainsi une impulsion lumineuse laser (schématisée au dessin par la flèche 26) qui sort par la fenêtre 21 après avoir progressé le long de l'axe longitudinal de la cavité 5.

La décharge électrique une fois terminée (les condensateurs $C_1$ et $C_2$ étant alors complètement déchargés), l'éclateur E se désamorce et le condensateur $C_1$ se charge à nouveau. Le laser est alors prêt pour le génération d'une nouvelle impulsion lumineuse laser. Ces impulsions peuvent être produites de manière récurente par activation périodique de l'électrode de déclenchement 14.

Exemple

A titre d'exemple, on peut réaliser une structure de laser analogue à celle sus-décrite, qui présente les caractéristiques suivantes:

Caractéristiques mécaniques et électriques

| | |
|---|---|
| Dimension des blocs céramiques: | Largeur = 60 mm |
| | Longueur = 80 mm |
| | Hauteur = 12 mm (pour bloc 7) |
| | = 24 mm (pour bloc 10) |
| Dimension de la cavité 5: | Largeur = 8 mm (épaisseur des électrodes) |
| | Hauteur = 8 mm (distance entre électrodes) |
| | Longueur = 80 mm |
| Electrode corona: | Epaisseur = 2/10·mm |
| Tension de charge maxima: | 20 à 30 kV |

Caractéristique d'émission laser

| | |
|---|---|
| Gaz: | $N_2$ à 1 bar |
| Longeur d'onde de l'émission: | 337.1 nm (3371 Å) |
| Fréquence de récurrence: | 1 à $10^4$ hertz |
| Durée impulsion laser: | 1 à 2 nanosecondes |
| Energie de l'impulsion: | 300 microjoules |

Les caractéristiques susmentionnées montrent à l'évidence la caractère particulièrement compact de la structure ainsi réalisée. Ainsi qu'on peut le constater, ce caractère particulièrement compact résulte non seulement d'une réduction des dimensions de la structure de stockage capacitif mais surtout d'une réduction dans les mêmes proportions des dimensions de la cavité laser (et notamment de sa longueur), ce qui constitue un résultat tout à fait inattendu et surprenant puisqu'il était généralement admis jusqu'à présent qu'il fallait des longueurs de cavité relativement élevées pour obtenir une émission stimulée. L'obtention d'une émission stimulée est précisément rendue possible dans le laser compact selon l'invention grâce à la conjonction heureuse de plusieurs facteurs interdépendants: réduction des dimensions du système "à transfert de charge" entraînant une réduction de son impédance caractéristique, laquelle permet d'obtenir une montée en courant plus rapide dans la cavité, ce qui se traduit par une augmentation du taux d'inversion de la population, laquelle augmentation entraîne à son tour une réduction de la longueur-seuil à partir de laquelle peut avoir lieu une émission stimulée.

A titre comparatif, un laser "à transfert de charge" conventionnel (avec diélectrique Mylar) devrait, pour donner des performances analogues (puissance crête identique) à celles susmentionnées, présenter un volume environ 100 fois plus grand et un poids environ 100 fois plus élevé.

Dans la forme d'exécution sus-décrite, on peut par ailleurs envisager différentes variantes en ce qui concerne les électrodes de décharge équipant les bords longitudinaux de la cavité laser. Ainsi, on peut prévoir d'utiliser de simples électrodes arrondies sans adjonction d'électrodes corona pour de faibles pressions de fonctionnement. De même, on peut prévoir d'utiliser de simples électrodes planes équipées d'électrodes corona pointant de leur face plane pour obtenir une ionisation homogène sous des pressions allant, jusqu'à 760 torr. On peut également prévoir d'utiliser des électrodes arrondies recouvertes d'un élément radioactif tel que le strontium 90, le rayonnement $\beta$ ainsi dégagé étant chargé d'assurer la préionisation de la cavité. Pour plus de détails sur ces différentes électrodes, ainsi que sur certains autres éléments constitutifs du laser selon la présente invention, on pourra se reporter utilement à la demande de brevet suisse No 8009/76 au nom de la demanderesse, incorporé par référence dans la présente description.

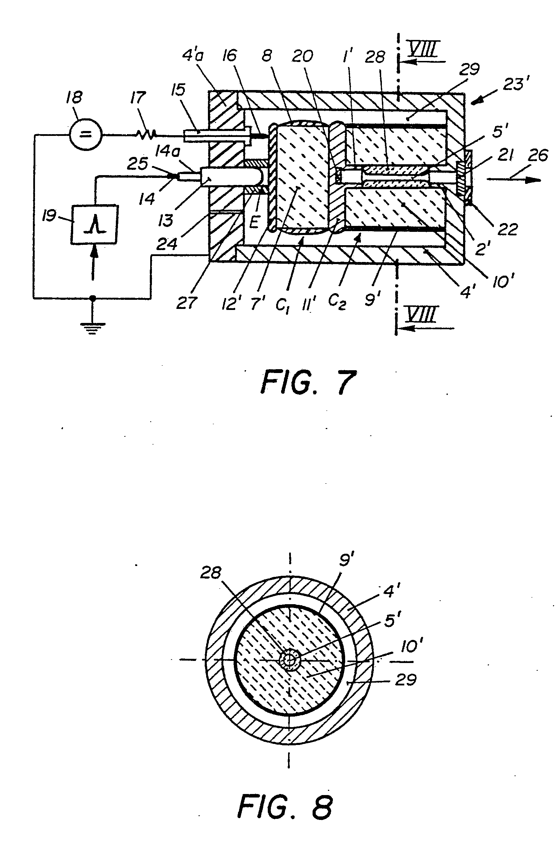

Le dispositif représenté aux figures 7 à 9 constitue une variante de l'agencement du type à "transfert de charge simple" des figures 1 à 6, suivant laquelle la cavité laser est excitée longitudinalement au lieu d'être excitée transversalement comme précédemment, cette excitation longitudinale étant, par ailleurs, obtenue au moyen d'un système à transfert de charge "du type coaxial" (analogie avec une infinité de condensateurs en parallèle).

Les dispositif représenté sur ces figures 7 à 9 est sensiblement identique à celui des figures 1 à 6 (les éléments identiques restant affectés des mêmes signes de référence au dessin), mis à part le fait que les blocs diélectriques présentent ici une forme cylindrique au lieu de parallélépipédique (le boîtier étant donc également cylindrique) et que la cavité du laser est, par ailleurs, ménagée à l'intérieur de l'un des blocs diélectriques au lieu d'être disposée adjacente à ce bloc comme précédemment. De manière plus détaillée, ce dispositif comprend un boîtier métallique cylindrique 23' se composant d'un récipient cylindrique 4' fermé par un couvercle plat circulaire 4'a. A l'intérieur du boîtier 23' se trouvent disposés, respectivement, un second bloc diélectrique cylindrique 10' reposant par sa face inférieure sur le fond du récipient 4' (bloc 10' fait en un matériau à haut coefficient diélectrique tel qu'une céramique de titanate de baryum); une première armature métallique circulaire 11' recouvrant la face supérieure du bloc 10'; un premier bloc diélectrique cylindrique 7' reposant sur l'armature 11', d'épaisseur sensiblement égale à la moitié de celle du bloc 10'; et une seconde armature métallique circulaire 12' recouvrant la face supérieure du bloc 7' (tout en restant à distance du couvercle 4'a). L'ensemble constitué par le bloc diélectrique 7' et les armatures métalliques 12' et 11' est destiné à constituer un premier condensateur $C_1$ (cet ensemble constituant en fait, étant donné son agencement particulier, une infinité de petits condensateurs $C_{11}$ à $C_{1n}$ montés parallèle équivalents à un condensateur unique $C_1$), cependant que l'ensemble constitué par le bloc diélectrique 10', l'armature métallique 11' et le fond du récipient 4' est destiné à constituer un second condensateur $C_2$ (cet ensemble constituant également, en fait, une infinité de petits condensateurs $C_{21}$ à $C_{2n}$ montés en parallèle équivalents à un condensateur unique $C_2$). L'armature métallique 11', commune aux deux condensateurs $C_1$ et $C_2$, est reliée électriquement au fond du récipient 4' par une résistance de charge 9', laquelle est ici constituée par un film résistif de carbone recouvrant toute la surface latérale du bloc 10' (film résistif de carbone formé avantageusement autour du bloc 10' par une technique de dépôt sous vide).

Le bloc diélectrique cylindrique 10' comporte, par ailleurs, un alésage axial 5' le traversant de part en part, dans les extrémités duquel viennent déboucher, respectivement, une première électrode annulaire 1' solidaire de l'armature métallique 11', et une seconde électrode annulaire 2' solidaire du fond du récipient métallique 4'. Cet alésage axial 5' est destiné à constituer la cavité du laser, cependant que les électrodes 1' et 2' sont destinées à constituer les électrodes chargées d'assurer l'établissement d'une décharge électrique longitudinale au sein de cette cavité 5'. A l'intérieur de la cavité 5' se trouve en outre disposé un tube rectiligne cylindrique 28 fait en un matériau isolant supportant bien les hautes températures (tel que céramique, BeO, $SiO_2$, $ThO_2$), dont le rôle est de limiter la section droite de la cavité laser (par un choix adéquat du diamètre intérieur de ce tube 28, on peut ainsi ajuster, à pression constante dans la cavité, l'intensité du courant électrique circulant dans le plasma lors de la décharge).

La cavité laser 5' est, par ailleurs, respectivement équipée d'un premier miroir totalement réfléchissant 20 fixé au fond de l'électrode annulaire 1' et d'un second miroir semi-transparent 21 fixé au travers d'un alésage axial percé dans le fond du récipient 4'. De manière avantageuse, la cavité 5' ainsi pourvue des miroirs 20 t 21 peut être réalisée de manière étanche, de façon à constituer ainsi un tube scellé contenant le milieu actif gazeux à exciter électriquement. En variante, on peut également envisager que le milieu actif gazeux occupe à la fois la cavité 5' et l'intérieur 29 du boîtier 23', de façon à servir additionnellement d'isolant diélectrique (en prévoyant un conduit de communication adéquat entre la cavité 5' et l'intérieur 29 du boîtier 23').

Dans la forme d'exécution sus-décrite, on peut, par ailleurs, reconnaître, respectivement, le doigt métallique 16 en contact avec l'armature métallique 12' destiné à assurer par l'intermédiaire de la source 18 la charge du condensateur $C_1$ et le bloc métallique à l'extrémité arrondie 13 coopérant avec l'armature 12' de façon à constituer l'éclateur E destiné à assurer par l'intermédiaire de l'électrode de déclenchement 14 la décharge du condensateur $C_1$ et le transfert de cette charge dans le condensateur $C_2$, en vue de provoquer l'émission stimulée dans la cavité laser 5'. Cet éclateur E peut avantageusement être entouré par une chambre de séparation circulaire 27 (faite en céramique ou en matière isolante), de façon à pouvoir opérer avec des gaz différents au niveau de l'éclateur E et dans le boîtier 23' et/ou la cavité 5' (cette chamber 27 pouvant être supprimée dans le cas où on désire opérer avec des gaz identiques).

En variante, et dans le cas où la cavité 5' est entièrement étanche, on peut aussi envisager que l'intérieur 29 du boîtier 23 soit occupé par un diélectrique liquide (tel que de l'huile, de l'eau distillée), l'éclateur E pouvant alors lui aussi être plongé dans le même liquide diélectrique et servir alors d'éclateur à commutation ultra rapide. Il convient alors dans un tel cas de supprimer l'électrode de déclenchement 14 ainsi que l'entrée de gaz 25 et le tube isolant 14a, l'éclateur E étant alors auto-amorçable et le claquage se produisant au moment où la tension aux bornes de l'éclateur E dépasse la tension de claquage du diélectrique liquide.

La figure 9 représente le schéma du circuit électrique équivalent du laser représenté aux figures 7 et 8. Le fonctionnement d'un tel laser est analogue à celui précédemment décrit, mis à part le fait que la décharge électrique au sein de la cavité laser 5' s'établit ici longitudinalement au lieu de transversalement comme précédemment.

Dans les formes d'exécution décrites jusqu'à présent, il est possible d'envisager des variantes diverses en ce qui concerne l'éclateur chargé d'assurer l'amorçage du processus de décharge. On peut ainsi tout d'abord prévoir d'utiliser un éclateur à milieu diélectrique gazeux, ce milieux gazeux pouvant être, comme expliqué plus haut, de nature différente et/ou sous une pression différente du milieu actif gazeux stationnant dans la cavité laser. En ce qui concerne cet éclateur à milieu gazeux, on peut par ailleurs prévoir d'utiliser soit un type d'éclateur comportant une électrode de déclenchement, soit un type plus simple ne comportant pas d'électrode de déclenchement. On peut également prévoir d'utiliser un éclateur à milieu diélectrique liquide ou solide au lieu de gazeux.

Dans le laser selon l'invention, l'utilisation d'un éclateur tel que ceux susmentionnés n'est, par ailleurs, pas obligatoire, et on peut très bien envisager de le remplacer par tout autre organe de décharge capable d'assurer une fonction équivalente (à savoir mise en court-circuit momentanée de deux armatures de façon à opérer un transfert de charge entre deux condensateurs). Comme autres organes de décharge possibles, on peut envisager d'utiliser des commutateurs tels que des commutateurs à semi-conducteur (présentant l'avantage d'occasionner une dissipation d'énergie plus faible) ou des commutateurs à thyratron. Les commutateurs à thyratron présentent, notamment, l'avantage de permettre des fréquences de répétition plus élevées ainsi qu'une grande précision dans le déclenchement (tout en présentant une durée de vie très élevée).

Le laser selon l'invention présente un certain nombre d'avantages dont deux des principaux ont trait, respectivement, à son caractère particulièrement compact ainsi qu'à ses excellentes caractéristiques électriques. Le caractère particulièrement compact permet notamment d'obtenir, pour des puissances de crête analogues à celles des lasers conventionnels, une réduction considérable de l'encombrement (ou, inversement, pour un encombrement analogue à celui des lasers conventionnels, des puissances de crête considérablement plus élevées).

Les excellentes caractéristiques électriques du laser selon l'invention se traduisent, par ailleurs, par une réduction notable aussi bien de l'impédance caractéristique de ligne que de l'impédance totale du circuit: cette faible valeur de l'impédance caractéristique de ligne permet un fonctionnement à haute pression lequel permet d'obtenir des impulsions de très courte durée (impulsions picosecondes) en même temps qu'il entraîne un gain supplémentaire sur l'impédance totale du circuit. Les facteurs susmentionnés permettent, en outre, en donnant une vitesse de pompage plus élevée, d'obtenir un meilleur rendement quantique de pompage. Un tel type de laser présente, par ailleurs, l'avantage de posséder une très bonne rigidité mécanique ainsi qu'une très bonne tenue aux cycles thermiques. L'utilisation de matériaux céramiques présente en outre l'avantage additionnel, par rapport aux diélectriques classiques, de n'être pas destructible par l'ionisation corona, d'avoir une durée de vie relativement longue et de présenter une bonne insensibilité vis-à-vis des rayonnements radioactifs (possibilité d'utilisation dans un environnement radioactif). Ce type de laser est, par ailleurs, susceptible de fonctionner sous des fréquences de récurence relativement élevées (en prévoyant au besoin un balayage de gaz transversal) tout en présentant un facteur d'angle de pente relativement faible à de telles fréquences. Enfin, ce type de laser permet notamment d'obtenir des impulsions laser de durée plus élevée ainsi qu'un rendement amélioré (de l'ordre de 10 à 20%) par rapport à celui obtenu avec des lignes Blumlein aux grandes fréquences de répétition.

Le laser selon l'invention est susceptible d'applications très diverses dans des domaines variés tels que:

— source d'excitation pour la photo-chimie;

— analyse de plasma pour la recherche thermonucléaire;

— outil de recherche pour l'étude de la durée de vie de molécules excitées;

— spectrométrie Raman;

— altimètre d'approche pour l'aviation;

— pompage de laser liquide ($\lambda$ variant de 350 à 1180 nm (3500 à 11800 Å);

— éclateur à tres haute tension déclenché au moyen d'UV;

— télémètre portatif à haute résolution;

— éclairage de cible (repérage, tirs);

— détecteur de pollution atmosphérique (radars laser Raman);

— mesure d'aérosol et d'humidité relative dans l'atmosphère;

— moyen de communication sous-marine;

— moyen de communication à longue distance (>20 km) en basse fréquence (jusqu'à 20 kHz);

— cellule de Kerr ultra-rapide miniature (électro-optique);

— générateur de lumière cohérente à 540.1 nm (5401 Å) de grande puissance;

— utilisation en opto-électronique;

— source de commutation pour les interrupteurs de Auston;

— etc....

**Revendications**

1. Laser impulsionnel à milieu actif gazeux excité électriquement, comprenant:

— un premier et un second bloc (7, 10) faits en un matériau diélectrique, comportant chacun deux faces d'extrémités, lesdits blocs étant agencés l'un par rapport à l'autre de façon à se faire vis-à-vis par l'une de leurs faces d'extrémité en délimitant un espace étroit entre lesdites faces d'extrémités,

— une première armature métallique (11) s'étendant dans ledit espace étroit entre lesdits blocs diélectriques tout en restant en contact avec l'une et l'autre faces d'extrémités desdits blocs se faisant vis-à-vis, ladite première armature métallique comportant au moins une portion (1) faisant saillie,

— une seconde armature métallique (12) disposée conte l'autre face d'extrémité dudit premier bloc diélectrique opposée à ladite première armature, constituant en coopération avec ledit premier bloc diélectrique et ladite première armature au moins un premier condensateur ($C_1$),

— une troisième armature métallique (23) disposée contre l'autre face d'extrémité dudit second bloc diélectrique opposée à ladite première armature (11), constituant en coopération avec ledit second bloc diélectrique et ladite première armature au moins un second condensateur ($C_2$), ladite troisième armature métallique comportant au moins une portion (2) faisant saillie en direction de ladite portion saillante de ladite première armature métallique, l'espace (5) constituant la cavité dudit laser étant délimité de deux côtés par lesdites portions saillantes desdites première et troisième armatures et, d'un troisième côté, par le second bloc diélectrique, cette cavité dudit laser étant destinée à contenir ledit milieux actif gazeux, et les extrémités libres desdites portions saillantes constituant les électrodes chargées d'assurer l'excitation électrique dudit milieu actif gazeux,

— des moyens (6) pour maintenir ledit milieu actif gazeux dans ladite cavité,

— une résistance de charge (9) connectée entre lesdites première et troisième armatures métalliques, ladite seconde armature métallique étant, par ailleurs, destinée à être reliée à l'un des pôles d'une source haute tension (18) dont l'autre pôle est destiné à être relié à ladite troisième armature métallique, de façon à assurer la charge électrique dudit premier condensateur,

— et un organe de décharge (E) déclenchable connecté entre lesdites seconde et troisième armatures destiné à assurer la mise ne court-circuit au moins momentanée de ces armatures, de façon à entraîner un transfert de charge dudit premier audit second condensateur, ledit transfert de charge donnant alors lieu à l'établissement entre lesdites électrodes de ladite cavité laser d'une différence de potential suffisamment rapide et élevée pour engendrer une émission stimulée au sein de cette cavité,

— caractérisé par le fait que la portion faisant saillie de la première armature métallique est pointée en direction du second bloc diélectrique et que le matériau constitutif des blocs (7, 10) a un coefficient diélectrique d'au moins 80.

2. Laser selon la revendication 1, caractérisé par le fait que l'épaisseur dudit second bloc diélectrique (10) est choisie supérieure à celle dudit premier bloc diélectrique (7).

3. Laser selon la revendication 2, caractérisé par le fait que l'épaisseur dudit second bloc diélectrique (10) est choisie égale à environ le double de celle dudit premier bloc.

4. Laser selon la revendication 1, caractérisé par le fait que ladite seconde armature métallique (12) est destinée à être reliée à l'un des pôles de ladite source haute tension (18) par l'intermédiaire d'une résistance électrique (17).

5. Laser selon la revendication 1, caractérisé par le fait que lesdits premier et second blocs diélectriques (7, 10) présentent une forme parallélépipédique et que ladite cavité laser est agencée le long d'une des faces latérales dudit second bloc parallélépipédique, lesdites portions saillantes (1, 2) desdites première et troisième armatures métalliques étant constituées par des rebords longitudinaux (1, 2) de ces armatures pointant l'un vers l'autre.

6. Laser selon la revendication 5, caractérisé par le fait que les extrémités libres (1, 2) desdits rebords longitudinaux présentent une forme arrondie.

7. Laser selon la revendication 5, caractérisé par le fait que lesdits rebords longitudinaux de ladite cavité sont, de plus, équipés d'électrodes corona (3) servant à assurer une préionisation dudit milieu actif gazeux.

8. Laser selon la revendication 1, caractérisé par le fait que lesdits premier et second blocs diélectriques (7', 10') présentent une forme cylindrique, et que ledit second bloc cylindrique comporte un alésage axial le traversant de part en part, ledit alésage axial (5') constituant la cavité laser dans chacune des extrémités de laquelle viennent déboucher lesdites portions saillantes (1', 2') desdites première et troisième armatures.

9. Laser selon la revendication 1, caractérisé par le fait que ledit matériau diélectrique se présente sous la forme d'une céramique.

10. Laser selon la revendication 1, caractérisé par le fait que ledit matériau diélectrique est constitué par un composé à base de titanate de baryum.

11. Laser selon la revendication 1, caractérisé par le fait que ledit matériau diélectrique est constitué par un composé à base d'oxyde de titane.

12. Laser selon la revendication 1, caractérisé par le fait que ledit matériau diélectrique est du $KD_2PO_4$, ledit matériau étant maintenu au voisinage de sa température de Curie par l'intermédiaire de cellules Peltier.

13. Laser selon la revendication 1, caractérisé par le fait que ledit milieu actif gazeux présente une pression comprise entre $10^{-3}$ Torr et 30 bars.

14. Laser selon la revendication 1, caractérisé par le fait que ledit milieu actif gazeux est constitué par de l'azote.

15. Laser selon la revendication 1, caractérisé par le fait que ledit milieu actif gazeux est constitué par de l'air à la pression atmosphérique.

16. Laser selon la revendication 1, caractérisé par le fait que ledit organe de décharge déclenchable est constitué par un éclateur dont l'une des bornes est constituée par une portion de ladite seconde armature, l'autre borne étant en contact électrique avec ladite troisième armature.

17. Laser selon la revendication 15, caractérisé par le fait que ledit éclateur est un éclateur à milieu diélectrique gazeux, ledit laser comprenant des moyens pour maintenir ledit milieu diélectrique gazeux dans l'espace situé entre les bornes dudit éclateur.

18. Laser selon la revendication 17, caractérisé par le fait que ledit gaz servant de milieu diélectrique pour ledit éclateur est différent dudit gaz remplissant ladite cavité du laser, les pressions desdits deux gaz étant également susceptibles d'être différentes.

19. Laser selon la revendication 17, caractérisé par le fait que ledit gaz servant de diélectrique pour ledit éclateur et ledit gaz remplissant ladite cavité sont identiques.

20. Laser selon la revendication 17, caractérisé par le fait que ledit éclateur est auto-déclenchable.

21. Laser selon la revendication 17, caractérisé par le fait que ledit éclateur comporte une électrode de déclenchement.

22. Laser selon la revendication 1, caractérisé par le fait que ledit organe de décharge est constitué par un commutateur.

23. Laser selon la revendication 1, caractérisé par le fait que ledit commutateur est un commutateur à thyratrons.

**Patentansprüche**

1. Elektrisch erregter Impulslaser mit gasförmigem Aktivmilieu, enthaltend

— einen ersten und einen zweiten Block (7, 10) aus einem dielektrischen Material mit jeweils zwei Endflächen, wobei die Blocks so zueinander angeordnet sind, daß sie sich mit einer ihrer Endflächen gegenüberliegen und einen engen Raum zwischen diesen Endflächen begrenzen,

— einen ersten Metallbelag (11), der sich in dem engen Raum zwischen den dielektrischen Blocks erstreckt und in Berührung mit der einen und der anderen der sich gegenüberliegenden Endflächen verbleibt, wobei der erste Metallbelag mindestens ein einen Vorsprung bildendes Teil (1) aufweist,

— einen zweiten Metallbelag (12), der gegen die andere Endfläche des ersten dielektrischen Blocks und gegenüber dem ersten Belag angeordnet ist, wodurch im Zusammenwirken mit dem ersten dielektrischen Block und dem ersten Belag zumindest ein erster Kondensator ($C_1$) gebildet wird,

— einen dritten Metallbelag (23) der gegen die andere Endfläche des zweiten dielektrischen Blocks gegenüber dem ersten Belag (11) anliegt, wodurch im Zusammenwirken mit dem zweiten dielektrischen Block und dem ersten Belag zumindest ein zweiter Kondensator ($C_2$) gebildet wird, wobei der dritte Metallbelag mindestens ein Teil (2) aufweist, das einen Vorsprung in Richtung des vorspringenden Teils des ersten Metallbelags bildet, und wobei der Zwischenraum (5), den Hohlraum des Laserstrahls bildet, der von zwei Seiten von den vorspringenden Teilen des ersten und des zweiten Belags und von einerdritten Seite vom zweiten dielektrischen Block begrenzt wird, wobei dieser Hohlraum des Laser das gasförmige Aktivmilieu enthalten soll und die freien Enden der vorspringenden Teile die Elektroden bilden, die aufgeladen sind, um die elektrische Erregung des gasförmigen Aktivmilieus zu gewährleisten,

— Mittel (6) zum Erhalten des gasförmigen Aktivmilieus in dem Hohlraum,

— einen Ladewiderstand (9), der zwischen dem ersten und dem dritten Metallbelag angeschlossen ist, wobei der zweite Metallbelag im übrigen an den einen der Pole einer Hochspannungsquelle (18) angeschlossen sein soll, deren anderer Pol an den dritten Metallbelag angeschlossen werden soll, so daß die elektrische Aufladung des ersten Kondensators gewährleistet ist,

— und ein Entladungsorgan (E), das auslösbar zwischen dem ersten und dem zweiten Belag angeschlossen ist und das zumindest vorübergehende Kurzschließen dieser Beläge gewährleisten soll, so daß eine Ladungsübertragung vom ersten auf den zweiten Kondensator in Bewegung gesetzt wird und diese Ladungsübertragung Anlaß zur Errichtung eines Potentialunterschiedes zwischen den Elektroden des Laserhohlraums gibt, der ausreichend schnell und hoch ist, um innerhalb dieses Hohlraums eine stimulierte Emission hervorzubringen, dadurch gekennzeichnet, daß der den Vorsprung des ersten Metallbelags bildende Teil in Richtung des zweiten dielektrischen Blocks eine Spitze aufweist, und daß das gebundene Material der Blocks (7, 10) einen dielektrischen Koeffizienten von mindestens 80 hat.

2. Laser nach Anspruch 1, dadurch gekennzeichnet, daß die Dicke des zweiten dielektrischen Blocks (10) so gewählt ist, daß sie über derjenigen des ersten dielektrischen Blocks (7) liegt.

3. Laser nach Anspruch 2, dadurch gekennzeichnet, daß die Dicke des zweiten dielektrischen Blocks (10) so gewählt wird, daß sie ungefähr doppelt so groß ist wie diejenige des ersten Blocks.

4. Laser nach Anspruch 1, dadurch gekennzeichnet, daß der zweite Metallbelag (12) mittels eines elektrischen Widerstandes (17) mit einem der Pole der Hochspannungsquelle (18) verbunden werden soll.

5. Laser nach Anspruch 1, dadurch gekennzeichnet, daß der erste und der zweite Metallblock (7, 10) eine parallelepipedische Form aufweisen und daß der Laserhohlraum entlang einer der Seitenflächen des zweiten parallelepipedischen Blocks angeordnet ist, wobei die vorspringenden Teile (1, 2) des ersten und des zweiten Metallbelags aus Längsrändern (1, 2) dieser Beläge bestehen, die in Richtung zueinander zugespitzt sind.

6. Laser nach Anspruch 5, dadurch gekennzeichnet, daß die freien Enden (1, 2) der Längsränder eine abgerundete Form aufweisen.

7. Laser nach Anspruch 5, dadurch gekennzeichnet, daß die Längsränder des Hohlraums außerdem mit Corona-Elektroden (3) versehen sind, um eine Vorionisierung des gasförmigen Aktivmilieus zu gewährleisten.

8. Laser nach Anspruch 1, dadurch gekennzeichnet, daß der erste und der zweite Metallblock (7', 10') eine zylindrische Form haben und daß der zweite zylindrische Block eine ihn durch und durch durchquerende Axialbohrung aufweist, wobei diese Axialbohrung (5') den Laserhohlraum bildet, in dessen Enden jeweils die vorspringenden Teile (1', 2') des ersten und des zweiten Belags einmünden.

9. Laser nach Anspruch 1, dadurch gekennzeichnet, daß das dielektrische Material die Form einer Keramik hat.

10. Laser nach Anspruch 1, dadurch gekennzeichnet, daß das dielektrische Material aus einer Verbindung auf der Basis von Bariumtitanat besteht.

11. Laser nach Anspruch 1, dadurch gekennzeichnet, daß das dielektrische Material aus einer Verbindung auf der Basis von Titanoxid besteht.

12. Laser nach Anspruch 1, dadurch gekennzeichnet, daß das dielektrische Material $KD_2PO_4$ ist, wobei das Material mit Hilfe von Peltier-Zellen nahe seiner Curie-Temperatur gehalten wird.

13. Laser nach Anspruch 1, dadurch gekennzeichnet, daß das gasförmige Aktivmilieu einen Druck zwischen $10^{-3}$ Torr und 30 bar aufweist.

14. Laser nach Anspruch 1, dadurch gekennzeichnet, daß das gasförmige Aktivmilieu aus Stickstoff besteht.

15. Laser nach Anspruch 1, dadurch gekennzeichnet, daß das gasförmige Aktivmilieu aus Luft bei atmosphärischem Druck besteht.

16. Laser nach Anspruch 1, dadurch gekennzeichnet, daß das auslösbare Entladeorgan aus einer Entladefunkenstrecke besteht, von der der eine Anschluß aus einem Teil des zweiten Belags besteht, während der andere Anschluß in elektrischer Verbindung mit dem dritten Belag steht.

17. Laser nach Anspruch 15, dadurch gekennzeichnet, daß der Entlader ein Entlader mit gasförmigem dielektrischem Milieu ist, wobei der Laser Mittel zum Aufrechterhalten des gasförmigen dielektrischen Milieus in dem Raum umfaßt, der zwischen den Anschlüssen des Entladers liegt.

18. Laser nach Anspruch 17, dadurch gekennzeichnet, daß das als dielektrisches Milieu dienende Gas für den Entlader von dem den Laserhohlraum füllenden Gas verschieden ist, wobei die Drücke der beiden Gase ebenfalls verschieden sein können.

19. Laser nach Anspruch 17, dadurch gekennzeichnet, daß das für den Entlader als Dielektrikum dienende Gas und das den Hohlraum füllende Gas identisch sind.

20. Laser nach Anspruch 17, dadurch gekennzeichnet, daß der Entlader selbstauslösend ist.

21. Laser nach Anspruch 17, dadurch gekennzeichnet, daß der Entlader eine Auslöseelektrode aufweist.

22. Laser nach Anspruch 1, dadurch gekennzeichnet, daß das Entladeorgan aus einem Kommutator besteht.

23. Laser nach Anspruch 1, dadurch gekennzeichnet, daß der Umschalter ein Thyratron-Kommutator ist.

**Claims**

1. A pulse laser with an electrically excited gaseous active medium comprising:

— a first and second block (7, 10) made of a material of high dielectric coefficient, each comprising two end faces, said blocks being so disposed one relative to the other that an end face of the one faces an end face of the other to define a narrow space between said end faces,

— a first metal plate (11) extending within said narrow space between said dielectric blocks and being in contact with both the end faces of said blocks which face each other, said first metal plate comprising at least one projecting portion (1),

— a second metal plate (12) disposed against the other end face of said first dielectric block opposite said first plate, to constitute at least one first capacitor ($C_1$) in cooperation with said first dielectric block and said first plate,

— a third metal plate (23) disposed against the other end face of said second dielectric block opposite said first plate (11), to constitute at least one second capacitor ($C_2$) in cooperation with said second dielectric block and said first plate, said third metal plate comprising at least one projecting portion (2) directed towards said projecting portion of said first metal plate, the space (5) thus defined between said projecting portions of said first and third plates constituting the laser cavity intended to contain said gaseous active medium, and the free ends of said projecting portions constituting the electrodes for providing electrical excitation of said gaseous active medium,

— means (6) for retaining said gaseous active medium in said cavity,

— a charging resistor (9) connected between said first and third metal plates, said second metal plate being connected to one of the poles of a high voltage source (18) the other pole of which is defined to be connected to said third metal plate, in order to electrically charge said first capacitor,

— and a triggerable discharger (E) connected between said second and third plates, to at least momentarily short-circuit said plates in order to cause charge transfer from said first to said second capacitor, said charge transfer then establishing between said electrodes of said laser cavity a sufficiently rapid and large potential difference to generate a stimulated emission within said cavity, characterized by the fact that the portion projecting from the first plate is directed toward the second dielectric block and that the material which the block (7, 10) are made of has a dielectric coefficient of at least 80.

2. A laser according to claim 1, characterized in that the thickness of said second dielectric block (10) is chosen greater than that of said first dielectric block (7).

3. A laser according to claim 2, characterized in that the thickness of said second dielectric block (10) is chosen equal to about double that of said first block.

4. A laser according to claim 1, characterized in that said second metal plate (12) is intended for connection to one of the poles of said high voltage source (18) by way of an electrical resistor (17).

5. A laser according to claim 1, characterized in that said first and second dielectric blocks (7, 10) are of parallelipiped shape, and said laser cavity is arranged along one of the lateral faces of said second parallelepiped block, said projecting portions (1, 2) of said first and third metal plates being constituted by longitudinal rims (1, 2) on said plates which point towards each other.

6. A laser according to claim 5, characterized in that the free ends (1, 2) of said longitudinal rims have a rounded shape.

7. A laser according to claim 5, characterized in that said longitudinal rims of said cavity are also fitted with corona electrodes to provide pre-ionisation of said gaseous active medium.

8. A laser according to claim 1, characterized in that said first and second block (7', 10') are of cylindrical shape, and said second cylindrical block comprises an axial bore which traverses it from one end to the other, said axial bore (5') constituting the laser cavity into each end of which there emerge said projecting portions (1', 2') of said first and third plates.

9. A laser according to claim 1, characterized in that said dielectric material is in the form of a ceramic.

10. A laser according to claim 1, characterized in that said dielectric material is constituted by a composition based on barium titanate.

11. A laser according to claim 9, characterized in that said dielectric material is constituted by a composition based on titanium oxide.

12. A laser according to claim 9, characterized in that said dielectric material is $KD_2PO_4$, said material being maintained in the vicinity of its Curie temperature by Peltier cells.

13. A laser according to claim 1, characterized in that said gaseous active medium has a pressure of between $10^{-3}$ Torr and 30 bars.

14. A laser according to claim 1, characterized in that said gaseous active medium is nitrogen.

15. A laser according to claim 1, characterized in that said gaseous active medium is air at atmospheric pressure.

16. A laser according to claim 1, characterized in that said triggerable discharge member is constituted by a discharger, one of the terminals of which is constituted by a portion of said second plate, the other terminal being in electrical contact with said third plate.

17. A laser according to claim 15, characterized in that said discharger is a discharger with a gaseous dielectric medium, said laser comprising means to retain said gaseous dielectric medium in the space situated between the terminals of said discharger.

18. A laser according to claim 17, characterized in that said gas serving as the dielectric medium for said discharger is different from the gas filling said laser cavity, the pressures of said two gases also being able to be different.

19. A laser according to claim 17, characterized in that said gas serving as the dielectric for said discharger and said gas filling said cavity are identical.

20. A laser according to claim 17, characterized in that said discharger is self-triggering.

21. A laser according to claim 17, characterized in that said discharger comprises a trigger electrode.

22. A laser according to claim 1, characterized in that said discharge member is constituted by a switch.

23. A laser according to claim 1, characterized in that said switch is a thyratron switch.

FIG. I

FIG. 2

FIG. 3

FIG. 4

FIG. 5

FIG. 6

FIG. 9

3

FIG. 7

FIG. 8

4